(19) Europäisches Patentamt
European Patent Office
Office européen des brevets

(11) **EP 1 169 784 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(21) Anmeldenummer: **00934912.7**

(22) Anmeldetag: **13.04.2000**

(51) Int Cl.⁷: $H04B\ 1/707$

(86) Internationale Anmeldenummer:
**PCT/DE00/01164**

(87) Internationale Veröffentlichungsnummer:
**WO 00/065737 (02.11.2000 Gazette 2000/44)**

(54) **VERFAHREN UND VORRICHTUNG ZUM DECODIEREN EINES CODEMULTIPLEX-SIGNALS**

METHOD AND DEVICE FOR DECODING A CODE MULTIPLEX SIGNAL

PROCEDE ET DISPOSITIF POUR DECODER UN SIGNAL MULTIPLEXE PAR REPARTITION DE CODE

(84) Benannte Vertragsstaaten:
**DE FR GB**

(30) Priorität: **22.04.1999 DE 19918386**

(43) Veröffentlichungstag der Anmeldung:
**09.01.2002 Patentblatt 2002/02**

(73) Patentinhaber: **SIEMENS AKTIENGESELLSCHAFT**
**80333 München (DE)**

(72) Erfinder: **FALKENBERG, Andreas**
**D-58093 Hagen (DE)**

(56) Entgegenhaltungen:
**EP-A- 0 570 273**          **US-A- 4 638 494**

**Beschreibung**

Die vorliegende Erfindung betrifft ein Verfahren zum Decodieren eines Codemultiplex-Signals nach dem Oberbegriff des Anspruches 1 sowie eine entsprechende Vorrichtung nach dem Oberbegriff des Anspruches 6. Ein solches verfahren bzw. eine solche Vorrichtung ist aus US-A-4 638 494 bekannt.

Bei der Codemultiplex-Technik (Code Division Multiple Access, CDMA) handelt es sich um ein Vielfachzugriffsverfahren, bei dem allen Teilnehmern des entsprechenden Mobilfunksystems erlaubt wird, gleichzeitig die gesamte zur Verfügung stehende Systembandbreite zu nutzen. Um dennoch Kollisionen zwischen den einzelnen Teilnehmern vermeiden zu können, werden die einzelnen Teilnehmersignale mit unterschiedlichen Codesequenzen versehen, welche somit eine eindeutige Zuordnung der empfangenen Signale ermöglichen. Während dieses Prozesses tritt eine Spreizung der Einzelsignale auf, wodurch sich die Bandbreite vervielfacht, so daß diese Technik auch als Spreizspektrumtechnik bezeichnet wird. Der Empfänger erhält dieses Signal, demoduliert es und führt eine De- oder Entspreizung durch, wobei ein zum Sender synchrones Spreizsignal verwendet wird. Der Empfänger empfängt zwar nicht nur das gewünschte Signal des Senders, sondern auch zusätzliche Signale von anderen Sendern, die im gleichen Frequenzbereich senden. Durch den Entspreizvorgang wird jedoch sichergestellt, daß nur das Signal entspreizt und in der Bandbreite verringert wird, welches den gleichen und synchronen Spreizcode wie der Empfänger verwendet.

In CDMA-Systemen ist es demzufolge wichtig, eine Synchronisierung zwischen dem Sender und dem Empfänger durchzuführen. In der Regel erfolgt dies in mehreren Schritten anhand von eigens zu diesem Zweck übertragenen Steuerinformationen, wobei initial eine Frequenzsynchronisation und anschließend eine zeitliche Synchronisation durchgeführt wird. Danach muß in dem Empfänger eine Codesynchronisation bzw. Codeidentifikation durchgeführt werden, um denjenigen Spreiz- und Verwürfelungscode (Scrambling Code) zu ermitteln, mit dem das Sendesignal codiert worden ist. Erst dann ist eine Entspreizung oder Decodierung des Empfangssignals möglich.

Um den richtigen Code für den Decodiervorgang herauszufinden, müssen empfängerseitig alle zur Verfügung stehenden Codes mit dem Empfangssignal korreliert werden, wobei als zu verwendender Code dann derjenige ausgewählt wird, dessen Codesequenz die größte Übereinstimmung oder Ähnlichkeit mit dem Empfangssignal aufweist. D.h. für jede mögliche Codesequenz $c_i$ wird in Bezug auf die Empfangssignalfolge r(t) die folgende Summe gebildet:

$$\sum_{t=0}^{T} r(t) \bullet c_i(t)$$

Dabei bezeichnet T den Korrelationszeitraum, über den die Multiplikationsergebnisse zwischen den einzelnen Werten der Empfangssignalfolge r(t) und der Codesequenz $c_i$(t) summiert bzw. integriert werden.

Für den UMTS-Mobilfunkstandard (Universal Mobil Telecommunication System) sind beispielsweise 16 mögliche Codes vorgesehen, d.h. i = 0...15. Die für die einzelnen Codesequenzen $c_i$(t) gemäß obiger Formel berechneten Ergebnisse werden verglichen und diejenige Codesequenz $c_i$(t) mit dem maximalen Energiewert, d.h. mit der größten Übereinstimmung oder Ähnlichkeit zu der Empfangssignalfolge r(t), ermittelt. Es kann dann angenommen werden, daß das Sendesignal mit diesem Code codiert worden ist, so daß anschließend die Decodierung mit Hilfe dieses Codes durchgeführt wird.

Anhand der obigen Formel ist ersichtlich, daß allgemein für n unterschiedliche Codes n Korrelationen mit einer entsprechenden Anzahl von Multiplikationen duchgeführt werden müssen. Dies kann sehr aufwendig sein und erfordert im Empfänger einen entsprechend hohen Hardwareaufwand an Addierern und Multiplizierern.

Der vorliegenden Erfindung liegt daher die Aufgabe zugrunde, ein verbessertes Verfahren und eine entsprechende Vorrichtung zum Decodieren eines Codemultiplex-Signals bereitzustellen, wobei insbesondere der zur Codierung verwendete Code einfacher und schneller ermittelt und das Codemultiplex-Signal entsprechend zuverlässig decodiert werden kann.

Diese Aufgabe wird gemäß der vorliegenden Erfindung durch ein Verfahren mit den Merkmalen des Anspruches 1 bzw. eine Vorrichtung mit den Merkmalen des Anspruches 6 gelöst. Die Unteransprüche beschreiben bevorzugte Ausführungsformen der vorliegenden Erfindung.

Erfindungsgemäß werden jeweils mehrere der zur Verfügung stehenden Codes zu Kombinationscodes kombiniert, welche jeweils anschließend mit dem Empfangssignal verglichen, d.h. korreliert werden, um denjenigen Kombinationscode zu ermitteln, der die größte Ähnlichkeit mit dem Codemultiplex-Signal aufweist. Anschließend müssen lediglich noch die Einzelcodes, welche zu diesem Kombinationscode kombiniert worden sind, einzeln mit dem Codemultiplex-Signal korreliert werden, um abschließend den zur Codierung des Codemultiplex-Signals verwendeten Code bestimmen und zur Decodierung verwenden zu können.

Sind beispielsweise n unterschiedliche Codes vorhanden und werden jeweils m dieser Codes zu einem Kombinationscode zusammengefaßt, sind zur Bestimmung des zur Decodierung zu verwendenden Codes lediglich n/m + m Korrelationen gemäß der eingangs vorgestellten Formel erforderlich.

Besonders vorteilhaft ist es, jeweils zwei Einzelcodes zu einem Kombinationscode zu addieren.

Insbesondere bei orthogonalen Codes kann davon ausgegangen werden, daß bei Korrelation der generierten Kombinationscodes mit Hilfe der eingangs beschriebenen Formel dann ein maximaler Wert berechnet wird, wenn der entsprechende Kombinationscode den vom Sender zur Codierung verwendeten Code enthält, so daß mit Hilfe der Kombinationscodes eine zuverlässige Vorauswahl getroffen werden kann. Dabei ist jedoch Voraussetzung, daß jeder Einzelcode lediglich für einen der Kombinationscodes verwendet worden ist.

Stehen beispielsweise insgesamt 16 unterschiedliche Codes zur Verfügung und werden jeweils zwei dieser Codes zu einem Kombinationscode addiert, können mit lediglich acht Korrelationen die Anzahl der möglichen Codes zunächst auf zwei reduziert und anschließend mit Hilfe von zwei weiteren Korrelationsberechnungen der tatsächlich verwendete Code aus diesen zwei Codes ermittelt werden, so daß insgesamt lediglich zehn Korrelationen erforderlich sind.

Die vorliegende Erfindung kann insbesondere in UMTS-Mobilfunkempfängern eingesetzt werden und bietet besondere Vorteile dann, wenn die Anzahl n der möglichen Codes relativ groß, beispielsweise auch größer als 16, ist.

Die Erfindung wird nachfolgend anhand eines Ausführungsbeispiels unter Bezugnahme auf die Zeichnung näher erläutert.

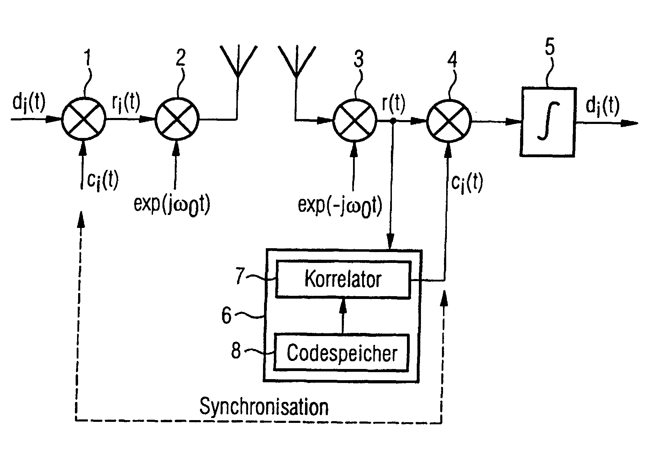

Dabei zeigt die einzige Fig. 1 eine stark vereinfachte Darstellung zur Erläuterung des Prinzips einer Signalübertragung zwischen einem CDMA-Sender und einem CDMA-Empfänger gemäß der vorliegenden Erfindung.

Wie bereits erläutert worden, werden bei Anwendung der CDMA-Technik die zu übertragenden Daten $d_i(t)$ eines Ubertragungskanals oder Teilnehmers i im Sender zunächst mit einer teilnehmerspezifischen Codesequenz $c_i(t)$ versehen, die dafür sorgt, daß empfangsseitig eine eindeutige Zuordnung der empfangenen Signale möglich ist. Während dieses Prozesses tritt eine Spreizung der Einzelsignale auf, wodurch sich die Bandbreite vervielfacht, so daß diese Technik auch als Spreizspektrumtechnik bezeichnet wird. Gemäß Fig. 1 werden die zu übertragenden Daten $d_i(t)$ des Teilnehmers i daher zunächst einem Multiplizierer 1 zugeführt und mit der teilnehmerspezifischen Codesequenz $c_i(t)$ multipliziert bzw. gespreizt, welche unabhängig von den zu sendenden Daten ist. Das somit erhaltene Signal $r_i(t)$ wird anschließend mit Hilfe eines weiteren Multiplizierers 2 auf einen hochfrequenten Träger $\exp(j\omega_0 t)$ aufmoduliert und über ein (in Fig. 1 nicht gezeigtes) Bandpaßfilter (Sendefilter) und einem (in Fig. 1 ebenfalls nicht dargestellten) Leistungsverstärker, der für die erforderliche Sendeleistung sorgt, über eine Antenne an einen Empfänger übertragen.

Der Empfänger erhält dieses Signal von seiner Antenne und demoduliert es mit Hilfe eines Multiplizierers (3). Zwischen der Antenne und dem Multiplizierer bzw. Demodulator 3 des Empfängers kann ein (nicht gezeigtes) Bandpaßfilter zur Selektion und Rauschminderung vorgesehen sein. Mit Hilfe eines weiteren Multiplizierers 4 wird eine De- oder Entspreizung des demodulierten Signals r(t) durchgeführt, wobei ein zum Sender synchrones Spreizsignal $c_i(t)$ verwendet wird. Der Empfänger empfängt zwar nicht nur das gewünschte Signal des Senders, sondern auch zusätzliche Signale von anderen Sendern, die im gleichen Frequenzbereich senden. Durch den beschriebenen Entspreizvorgang wird jedoch sichergestellt, daß nur das Signal entspreizt und in der Bandbreite verringert wird, welches den gleichen und synchronen Spreizcode $c_i(t)$ wie der Empfänger verwendet, so daß nach dem Entspreizen das gewünschte Signal $d_i(t)$ auf einfache Art und Weise aus dem Summensignal herausgefiltert werden kann. Zu diesem Zweck ist in Fig. 1 ein Integrator 5 vorgesehen, der sich im Spektralbereich wie ein Tiefpaßfilter verhält.

Die Spreizung/Entspreizung bzw. Codierung/Decodierung erfolgt somit durch Multiplikation mit einem breitbandigen Rauschsignal $c_i(t)$. Es wäre ideal, wenn als Rauschsignal $c_i(t)$ eine reproduzierbare Rauschsequenz ohne statistische Bindung oder Korrelation zwischen den einzelnen Elementen der Sequenz verwendet werden könnte. Derartige ideale Rauschsequenzen lassen sich jedoch technisch nicht reproduzierbar in der für die Spreizspektrumtechnik nötigen Form erzeugen, so daß als Codesequenzen $c_i(t)$ rauschähnliche Sequenzen, sogenannte Pseudo Noise (PN-) Sequenzen, verwendet werden.

Aus der obigen Beschreibung wird ersichtlich, daß für eine zuverlässige Decodierung eines Codemultiplex-Signals Voraussetzung ist, empfängerseitig die vom Sender verwendete teilnehmerspezifische Codesequenz $c_i(t)$ aus mehreren zur Verfügung stehenden Codes auszuwählen und dem Decodierer bzw. Multiplizierer 4 zuzuführen.

Aus diesem Grunde ist gemäß Fig. 1 eine Codeauswahleinrichtung 6 vorgesehen, der das demodulierte Empfangssignal r(t) zugeführt wird. Die Codeauswahleinrichtung 6 kann durch Korrelationsberechnungen denjenigen Code ermitteln, der vom Sender zur Codierung des Codemultiplex-Signals r(t) verwendet worden ist.

Zu diesem Zweck umfaßt die Codeauswahleinrichtung 6 erfindungsgemäß einen Codespeicher 8, in dem sämtliche zur Verfügung stehenden Codefolgen $c_i(t)$ gespeichert sind. Auf den Codespeicher 8 greift eine Korrelations- oder Vergleichseinrichtung 7 zu, welche die in dem Codespeicher 8 abgelegten Einzelcodefolgen $c_i(t)$ gemäß einem vorgegebenen Schema zu Kombinationscodes kombiniert, welche dann durch Vergleich mit der Empfangssignalfolge r(t) zu einer Vorauswahl herangezogen werden.

Die Korrelationseinrichtung 7 kann insbesondere derart ausgestaltet sein, daß sie jeweils zwei unterschiedliche Codefolgen addiert und die somit erhaltenen Additions- oder Kombinationscodefolgen mit der Empfangssignalfolge gemäß folgender Formel korreliert:

$$\sum_{t=0}^{T} r(t) \bullet (c_{2i}(t) + c_{2i+1}(t))$$

Somit werden bei dem vorliegenden Ausführungsbeispiel die Codefolgen $c_0(t)$ und $c_1(t)$, $c_2(t)$ und $c_3(t)$, $c_4(t)$ und $c_5(t)$ etc. addiert und die daraus resultierenden Additionsergebnisse jeweils mit der Empfangssignalfolge $r(t)$ multipliziert. Die Codepaare können jedoch allgemein beliebig gewählt werden. Des weiteren ist grunsätzlich denkbar, jeweils auch mehr als zwei Codes miteinander zu kombinieren oder eine von einer Addition abweichende Kombinationsart zu wählen.

Die mit Hilfe der obigen Formel berechneten Korrelationsergebnisse der einzelnen Additionscodefolgen werden miteinander verglichen. Insbesondere bei orthogonalen Codes kann davon ausgegangen werden, daß für diejenige Additionscodefolge ein maximaler Korrelationswert berechnet wird, die auch die von dem Sender verwendete Codefolge aufweist. Somit kann die Korrelationseinrichtung 7 eine Vorauswahl treffen und bei Vorliegen von z.B. n = 16 möglichen Codefolgen lediglich anhand von acht Korrelationsberechnungen die Anzahl der möglichen Codefolgen auf zwei reduzieren.

Nachdem die Korrelationseinrichtung die Additionscodefolge mit dem maximalen Korrelationswert ermittelt hat, muß sie nunmehr eine Korrelation der in der entsprechenden Additionscodefolge enthaltenen Einzelcodefolgen mit dem Empfangssignal $r(t)$ durchführen, um durch Vergleich dieser Korrelationsergebnisse den von dem Sender verwendeten Code ermitteln und dem Multiplizierer 4 zur Decodierung des Empfangssignals zuführen zu können.

Da das zuvor vorgestellte Verfahren eine etwas geringere Genauigkeit als das eingangs beschriebene herkömmliche Verfahren aufweist, bei dem jeder Einzelcode mit dem Empfangssignal korreliert wird, stellt es insbesondere bei Signalen mit guter Empfangsqualität eine Möglichkeit zur schnellen Codeidentifikation mit geringerem Aufwand dar.

Die vorliegende Erfindung kann insbesondere in UMTS-Mobilfunkempfängern eingesetzt werden. Gemäß dem UMTS-Mobilfunkstandard sind 16 mögliche Codes vorgesehen. Die Vorteile der Erfindung werden jedoch mit zunehmender Anzahl von möglichen Codes immer interessanter.

**Patentansprüche**

1. Verfahren zum Decodieren eines Codemultiplex-Signals,
   wobei ein empfangenes Codemultiplex-Signal ($r(t)$) mit verschiedenen, für die Decodierung zur Verfügung stehenden Codes ($c(t)$) verglichen wird, um denjenigen Code ($c(t)$) zu ermitteln, welcher zur Codierung des Codemultiplex-Signals verwendet worden ist,
   wobei das Codemultiplex-Signal ($r(t)$) mit dem ermittelten Code ($c(t)$) decodiert wird,
   wobei jeweils mehrere der zur Verfügung stehenden Codes ($c(t)$) kombiniert werden, um somit Kombinationscodes zu generieren, wobei jeder der Kombinationscodes mit dem empfangenen Codemultiplex-Signal ($r(t)$) verglichen wird und
   wobei derjenige Kombinationscode ermittelt wird, welcher mit dem empfangenen Codemultiplex-Signal ($r(t)$) die größte Ähnlichkeit aufweist, **dadurch gekennzeichnet,**
   **daß** diejenigen Codes ($c(t)$), welche zu dem ermittelten Kombinationscode kombiniert worden sind, einzeln mit dem empfangenen Codemultiplex-Signal ($r(t)$) verglichen werden, um denjenigen Code ($c(t)$) zu ermitteln, welcher mit dem empfangenen Codemultiplex-Signal $r(t)$) die größte Ähnlichkeit aufweist,
   wobei das empfangene Codemultiplex-Signal ($r(t)$) mit diesem Code ($c(t)$) decodiert wird.

2. Verfahren nach Anspruch 1,
   **dadurch gekennzeichnet,**
   **daß** jeweils zwei Codes ($c(t)$) zu einem Kombinationscode kombiniert werden.

3. Verfahren nach Anspruch 1 oder 2,
   **dadurch gekennzeichnet,**
   **daß** jeder Kombinationscode durch Addieren der entsprechenden einzelnen Codes generiert wird.

4. Verfahren nach einem der vorhergehenden Ansprüche,
   **dadurch gekennzeichnet,**
   **daß** das empfangene Codemultiplex-Signal ($r(t)$) mit den Kombinationscodes bzw. den einzelnen Codes ($c(t)$) dadurch verglichen wird, daß seine einzelnen Signalwerte mit Werten der Kombinationscodes bzw. der einzelnen Codes ($c(t)$) multipliziert und die Multiplikationsergebnisse addiert werden, wobei als Kombinationscode bzw. einzelner Code ($c(t)$), welcher die größte Ähnlichkeit mit dem Codemultiplex-Signal ($r(t)$) besitzt, derjenige Kombinationscode bzw. einzelne Code ($c(t)$) ausgewählt wird, dessen Summe der Multiplikationsergebnisse den größten Wert besitzt.

5. Verfahren nach einem der vorhergehenden Ansprüche,
**dadurch gekennzeichnet,**
**daß** die zur Decodierung des Codemultiplex-Signals (r(t)) zur Verfügung stehenden Codes (c(t)) orthogonale Codes sind.

6. Vorrichtung zum Decodieren eines Codemultiplex-Signals, mit Speichermitteln (8) zum Speichern von verschiedenen, für die Decodierung zur Verfügung stehenden Codes (c(t)), und mit Vergleichsmitteln (7) zum Vergleichen eines empfangenen Codemultiplex-Signals (r(t)) mit den in den Speichermitteln (8) gespeicherten Codes (c(t)), um denjenigen Code (c(t)) zu ermitteln, welcher zur Codierung des Codemultiplex-Signals verwendet worden ist, und mit Decodiermitteln (4) zum Decodieren des Codemultiplex-Signals (r(t)) mit dem ermittelten Code (c(t)),
wobei die Vergleichsmittel (7) derart ausgestaltet sind, daß sie jeweils mehrere der in den Speichermitteln (8) gespeicherten einzelnen Codes (c(t)) zu Kombinationscodes kombinieren und jeden der Kombinationscodes mit dem empfangenen Codemultiplex-Signal (r(t)) vergleichen, und
wobei die Vergleichsmittel (7) derart ausgestaltet sind, daß sie denjenigen Kombinationscode ermitteln, welcher mit dem empfangenen Codemultiplex-Signal (r(t)) die größte Ähnlichkeit aufweist, **dadurch gekennzeichnet, dass** die Vergleichsmittel (7) diejenigen Codes (c(t)), welche zu dem ermittelten Kombinationscode kombiniert worden sind, einzeln mit dem empfangenen Codemultiplex-Signal (r(t)) vergleichen, um somit denjenigen einzelnen Code (c(t)) zu ermitteln, welcher mit dem empfangenen Codemultiplex-Signal r(t)) die größte Ähnlichkeit aufweist,
wobei die Vergleichsmittel (7) den Decodiermitteln (4) den auf diese Weise ermittelten einzelnen Code (c(t)) zur Decodierung des empfangenen Codemultiplex-Signals (r(t)) zuführen.

7. Vorrichtung nach Anspruch 6,
**dadurch gekennzeichnet,**
**daß** die Vergleichsmittel (7) derart ausgestaltet sind, daß sie jeweils zwei Codes (c(t)) zu einem Kombinationscode kombinieren.

8. Vorrichtung nach Anspruch 6 oder 7,
**dadurch gekennzeichnet,**
**daß** die Vergleichsmittel (7) derart ausgestaltet sind, daß sie jeden Kombinationscode durch Addieren der entsprechenden einzelnen Codes generieren.

9. Vorrichtung nach einem der Ansprüche 6-8,
**dadurch gekennzeichnet,**
**daß** die Vergleichsmittel (7) das empfangene Codemultiplex-Signal (r(t)) mit den Kombinationscodes bzw. den einzelnen Codes (c(t)) dadurch vergleichen, daß einzelne Signalwerte des Codemultiplex-Signals (r(t)) mit Werten der Kombinationscodes bzw. der einzelnen Codes (c(t)) multipliziert und die Multiplikationsergebnisse addiert werden, wobei die Vergleichsmittel (7) als Kombinationscode bzw. einzelnen Code (c(t)), welcher die größte Ähnlichkeit mit dem Codemultiplex-Signal (r(t)) besitzt, denjenigen Kombinationscode bzw. einzelnen Code (c(t)) auswählen, dessen Summe der Multiplikationsergebnisse den größten Wert besitzt.

10. Vorrichtung nach einem der Ansprüche 6-9,
**dadurch gekennzeichnet,**
**daß** die in den Speichermitteln (8) gespeicherten Codes (c(t)) orthogonale Codes sind.

11. Verwendung einer Vorrichtung nach einem der Ansprüche 6-10 in einem Mobilfunk-Empfänger, wobei ein auf ein Trägersignal aufmoduliertes Codemultiplex-Signal (r(t)) zunächst mit Hilfe eines Demodulators (3) demoduliert und das demodulierte Codemultiplex-Signal (r(t)) mit Hilfe der Vorrichtung decodiert wird.

12. Verwendung nach Anspruch 11,
**dadurch gekennzeichnet,**
**daß** die Vorrichtung in einem UMTS-Mobilfunk-Empfänger verwendet wird.

## Claims

1. Method for decoding a code division multiplex signal, a received code division multiplex signal (r(t)) being compared with various codes (c(t)) available for decoding, in order to determine that code (c(t)) which has been used for encoding the code division multiplex signal,
the code division multiplex signal (r(t)) being decoded with the aid of the determined code (c(t)), a plurality of the available codes (c(t)) being combined in each case in order thereby to generate combination codes, each of the combination codes being compared with the received code division multiplex signal (r(t)), and that combination code being determined which has the greatest similarity with the received code division multiplex signal (r(t)), **characterized in that** those codes (c(t)) which have been combined to form the determined combination code are compared individually with the received code division multiplex signal (r(t)) in order to determine that code (c(t)) which has the greatest similarity with the received code division multiplex signal (r(t)), the received code division multiplex signal (r(t)) being decoded with the aid of this code (c(t)).

2. Method according to Claim 1, **characterized in that** in each case two codes (c(t)) are combined to form a combination code.

3. Method according to Claim 1 or 2, **characterized in that** each combination code is generated by adding the corresponding individual codes.

4. Method according to one of the preceding claims, **characterized in that** the received code division multiplex signal (r(t)) is compared with the combination codes or the individual codes (c(t)) by virtue of the fact that its individual signal values are multiplied by values of the combination codes or the individual codes (c(t)) and the multiplication results are added, in which case that combination code or individual code (c(t) whose sum of the multiplication results has the greatest value is selected as the combination code or individual code (c(t)) which has the greatest similarity with the code division multiplex signal (r(t)).

5. Method according to one of the preceding claims, **characterized in that** the codes (c(t)) available for decoding the code division multiplex signal (r(t)) are orthogonal codes.

6. Device for decoding a code division multiplex signal, having storage means (8) for storing various codes (c(t)) available for decoding, and having comparison means (7) for comparing a received code division multiplex signal (r(t)) with the codes (c(t)) stored in the storage means (8), in order to determine that code (c(t)) which has been used for encoding the code division multiplex signal, and having decoding means (4) for decoding the code division multiplex signal (r(t)) with the aid of the determined code (c(t)), the comparison means (7) being configured in such a way that they respectively combine a plurality of the individual codes (c(t)) stored in the storage means (8) to form combination codes, and compare each of the combination codes with the received code division multiplex signal (r(t)), and
the comparison means (7) being configured in such a way that they determine that combination code which has the greatest similarity with the received code division multiplex signal (r(t)), **characterized in that** the comparison means (7) individually compare with the received code multiplex signal (r(t)) those codes (c(t)) which have been combined to form the received combination code, in order thereby to determine that individual code (c(t)) which has the greatest similarity with the received code division multiplex signal (r(t)), the comparison means (7) feeding to the decoding means (4) the individual code (c(t)) determined in this way for the purpose of decoding the received code division multiplex signal (r(t)).

7. Device according to Claim 6, **characterized in that** the comparison means (7) are configured in such a way that they respectively combine two codes (c(t)) to form a combination code.

8. Device according to Claim 6 or 7, **characterized in that** the comparison means (7) are configured in such a way that they generate each combination code by adding the corresponding individual codes.

9. Device according to one of Claims 6-8, **characterized in that** the comparison means (7) compare the received code division multiplex signal (r(t)) with the combination codes or the individual codes (c(t)) by virtue of the fact that individual signal values of the code division multiplex signal (r(t)) are multiplied by values of the combination codes or the individual codes (c(t)) and the multiplication results are added, in which case the comparison means (7) select as combination code or individual code (c(t)) which has the greatest similarity with the code division multiplex signal (r(t)) that combination code or individual code (c(t)) whose sum of the multiplication results has the greatest value.

10. Device according to one of Claims 6-9, **characterized in that** the codes (c(t)) stored in the storage means (8) are orthogonal codes.

11. Use of a device as claimed in one of Claims 6-10 in a mobile radio receiver, in which a code division multiplex signal (r(t)) modulated onto a carrier signal is firstly demodulated with the aid of a demodulator (3), and the demodulated code division multiplex signal (r(t)) is decoded with the aid of the device.

12. Use as claimed in Claim 11, **characterized in that** the device is used in a UMTS mobile radio receiver.

**Revendications**

1. Procédé pour décoder un signal multiplexé par répartition de code,
dans lequel on compare un signal multiplexé par répartition de code et reçu (r(t)) à différents codes (c(t)) disponibles pour le décodage pour déterminer le code (c(t)) qui a été utilisé pour le codage du signal multiplexé par répartition de code,
dans lequel on décode le signal multiplexé par répartition de code (r(t)) avec le code (c(t)) déterminé,
dans lequel on combine à chaque fois plusieurs codes (c(t)) disponibles pour produire des codes combinés,
dans lequel on compare chacun des codes combinés au signal multiplexé par répartition de code et reçu (r(t)) et

dans lequel on détermine le code combiné qui présente la plus grande similitude avec le signal multiplexé par répartition de code et reçu (r(t)), **caractérisé par le fait qu'**on compare les codes (c(t)), qui ont été combinés pour donner le code combiné déterminé, individuellement au signal multiplexé par répartition de code et reçu (r(t)) pour déterminer le code (c(t)) qui présente la plus grande similitude avec le signal multiplexé par répartition de code et reçu (r(t)), le signal multiplexé par répartition de code et reçu (r(t)) étant décodé avec ce code (c(t)).

2. Procédé selon la revendication 1,
**caractérisé par le fait qu'**on combine à chaque fois deux codes (c(t)) pour donner un code combiné.

3. Procédé selon la revendication 1 ou 2,
**caractérisé par le fait qu'**on produit chaque code combiné par addition des codes individuels correspondants.

4. Procédé selon l'une des revendications précédentes,
**caractérisé par le fait qu'**on compare le signal multiplexé par répartition de code et reçu (r(t)) aux codes combinés ou aux codes individuels (c(t)) en multipliant ses valeurs de signal individuelles par des valeurs des codes combinés ou des codes individuels (c(t)) et en additionnant les résultats de multiplication, le code combiné ou le code individuel (c(t)) dont la somme des résultats de multiplication donne la plus grande valeur étant alors sélectionné comme code combiné ou code individuel (c(t)) qui a la plus grande similitude avec le signal multiplexé par répartition de code (r(t)).

5. Procédé selon l'une des revendications précédentes,
**caractérisé par le fait que** les codes (c(t)) disponibles pour le décodage du signal multiplexé par répartition de code (r(t)) sont des codes orthogonaux.

6. Dispositif pour décoder un signal multiplexé par répartition de code, comportant
des moyens de mémorisation (8) pour mémoriser différents codes (c(t)) disponibles pour le décodage, et
des moyens de comparaison (7) pour comparer un signal multiplexé par répartition de code et reçu (r(t)) aux codes (c(t)) mémorisés dans les moyens de mémorisation (8) afin de déterminer le code (c(t)) qui a été utilisé pour le codage du signal multiplexé par répartition de code, et
des moyens de décodage (4) pour décoder le signal multiplexé par répartition de code (r(t)) avec le code (c(t)) déterminé,

dans lequel les moyens de comparaison (7) sont conçus de manière à combiner à chaque fois plusieurs codes individuels (c(t)) mémorisés dans les moyens de mémorisation (8) pour donner des codes combinés et à comparer chacun des codes combinés au signal multiplexé par répartition de code et reçu (r(t)), et

dans lequel les moyens de comparaison (7) sont conçus de manière à déterminer le code combiné qui présente la plus grande similitude avec le signal multiplexé par répartition de code et reçu (r(t)),

**caractérisé par le fait que** les moyens de comparaison (7) comparent les codes (c(t)), qui ont été combinés pour donner le code combiné déterminé, individuellement au signal multiplexé par répartition de code et reçu (r(t)) afin de déterminer le code individuel (c(t)) qui présente la plus grande similitude avec le signal multiplexé par répartition de code et reçu (r(t)),

les moyens de comparaison (7) envoyant alors aux moyens de décodage (4) le code individuel (c(t)) déterminé de cette manière en vue du décodage du signal multiplexé par répartition de code et reçu (r(t)).

7. Dispositif selon la revendication 6,
**caractérisé par le fait que** les moyens de comparaison (7) sont conçus de manière à combiner à chaque fois deux codes (c(t)) pour donner un code combiné.

8. Dispositif selon la revendication 6 ou 7,
**caractérisé par le fait que** les moyens de comparaison (7) sont conçus de manière à produire chaque code combiné par addition des codes individuels correspondants.

9. Dispositif selon l'une des revendications 6 à 8,
**caractérisé par le fait que** les moyens de comparaison (7) comparent le signal multiplexé par répartition de code et reçu (r(t)) aux codes combinés ou aux codes individuels (c(t)) en multipliant des valeurs de signal individuelles du signal multiplexé par répartition de code (r(t)) par des valeurs des codes combinés ou des codes individuels (c(t)) et en additionnant les résultats de multiplication, les moyens de comparaison (7) sélectionnant alors comme code combiné ou code individuel (c(t)) qui a la plus grande similitude avec le signal multiplexé par répartition de code (r(t)) le code combiné ou le code individuel (c(t)) dont la somme des résultats de multiplication donne la plus grande valeur.

10. Dispositif selon l'une des revendications 6 à 9,
**caractérisé par le fait que** les codes (c(t)) mémorisés dans les moyens de mémorisation (8) sont des codes orthogonaux.

11. Utilisation d'un dispositif selon l'une des revendications 6 à 10 dans un récepteur de radiocommunication mobile,

dans laquelle un signal multiplexé par répartition de code (r(t)) modulé sur un signal porteur est d'abord démodulé à l'aide d'un démodulateur (3) et le signal multiplexé par répartition de code (r(t)) démodulé est décodé à l'aide du dispositif.

12. Utilisation selon la revendication 11,

**caractérisée par le fait que** le dispositif est utilisé dans un récepteur de radiocommunication mobile UMTS.

$d_j(t)$ →⊗(1) → $r_j(t)$ → ⊗(2) → antenna

$c_j(t)$ ↑

$\exp(j\omega_0 t)$ ↑

antenna → ⊗(3) → $r(t)$ → ⊗(4) → ∫(5) → $d_j(t)$

$\exp(-j\omega_0 t)$ ↑

$c_j(t)$ ↑

6
7 — Korrelator
8 — Codespeicher

Synchronisation